# EUROPÄISCHE PATENTANMELDUNG

(11) **EP 2 743 273 A1**
(43) Veröffentlichungstag der Anmeldung: **18.06.2014**
(21) Anmeldenummer: 12196767.3
(22) Anmeldetag: 12.12.2012
(51) Int. Cl.: C07F 15/00

(54) **Verfahren zur Herstellung wasserhaltiger Zubereitungen von Komplexen der Platingruppenmetalle**

(71) Anmelder: Umicore AG & Co. KG, 63457 Hanau (DE)
(72) Erfinder: Woerner, Eileen, 61130 Nidderau (DE); Karch, Ralf, 63801 Kleinostheim (DE); Rivas-Nass, Andreas, 69198 Schriesheim (DE); Doppiu, Angelino, 63500 Seligenstadt (DE)

(57) **Zusammenfassung**

Die Erfindung betrifft ein Verfahren zur Herstellung wasserhaltiger Zubereitungen von Komplexen der Platingruppenmetalle (PGM) Pt, Pd, Rh und Ir mit der allgemeinen Formel

[M^{A}/M^{B}/M^{C} (L)ₐ (H₂O)_{b} (O²⁻)_{c} (OH⁻)_{d}] (OH)^{e} (H⁺)_{f},

worin M^{A} = Pt^{II} oder Pd^{II}, M^{B} = Pt^{IV}, M^{C} = Rh oder Ir bedeuten, L ein neutraler ein- oder zweizähniger Donorligand ist sowie a eine ganze Zahl von 1 bis 4 (oder 2) bzw. 1 bis 6 (oder 3), b eine ganze Zahl von 0 bis 3 (oder 5), c eine ganze Zahl von 0 bis 3 (oder 4), d eine ganze Zahl von 0 bis 3 (oder 5), e eine ganze Zahl von 0 bis 2 (oder 3 oder 4) und f eine ganze Zahl von 0 bis 4 (oder 5) bedeuten.

Beim erfindungsgemäßen Verfahren werden die Hydroxokomplexe H₂Pd(OH)₄ (im Fall von M^{A} = Pd^{II}), H₂Pt(OH)₆ (im Fall von M^{A} = Pt^{II} und M^{B} = Pt^{IV}) oder H₃M^{C}(OH)₆ (für M^{C} = Rh^{III} oder Ir^{III}) mit den Donorliganden umgesetzt, wobei mindestens eine Hydroxogruppe des Hydroxokomplexes ausgetauscht wird. Vorzugsweise erfolgt die Reaktion bei Temperaturen im Bereich von 40 bis 110°C in einer Reaktionszeit zwischen 2 und 24 Stunden, wobei die Umsetzung im Fall von M^{A} = Pt^{II} zusätzlich in Gegenwart eines Reduktionsmittels erfolgt. Weiterhin umfasst das Verfahren optional einen Austausch der außerhalb der Komplexsphäre gebundenen OH-Anionen durch andere Anionen (z.B. Hydrogencarbonat- oder Carbonatanionen).

Die wasserhaltigen Zubereitungen enthalten PGM-Komplexe wie z.B. [Pt(en)₂](OH)₂, [Pt(EA)₄](OH)₂ oder [Rh(NH₃)₆](OH)₃ und finden Verwendung beispielsweise zur Herstellung von galvanischen Bädern, heterogenen Katalysatoren oder Metallpulvern.

## Beschreibung

Die vorliegende Erfindung betrifft ein Verfahren zur Herstellung wasserhaltiger Verbindungen und Komplexe der Platingruppenmetalle sowie deren Zubereitungen, Lösungen und Folgeprodukte. Die nach dem Verfahren hergestellten wasserhaltigen Zubereitungen der Platingruppenmetall-Komplexe sind halogenarm und finden Verwendung zum Beispiel als Edelmetall-Komponenten in galvanischen Bädern sowie als Vorläuferverbindungen ("Precursoren") zur Herstellung von heterogenen Katalysatoren wie beispielsweise Autoabgaskatalysatoren oder Trägerkatalysatoren.

Unter den Platingruppenmetallen (nachfolgend abgekürzt "PGM") werden in dieser Anmeldung die Metalle der zweiten und dritten Reihe der 8. Nebengruppe des Periodensystems der Elemente (PSE) verstanden, also die Metalle Ruthenium (Ru), Rhodium (Rh), Palladium (Pd), Osmium (Os), Iridium (Ir) und Platin (Pt). Bevorzugt betrifft die Erfindung die Verbindungen der Platingruppenmetalle Platin (Pt), Palladium (Pd), Rhodium (Rh) und Iridium (Ir). Unter "PGM-Ammin-Komplexen" werden in dieser Anmeldung Komplexe der Platingruppenmetalle mit Ammoniak-Liganden (NH₃-Liganden) verstanden. Solche Komplexe werden manchmal auch als "Ammoniakate" bezeichnet. Beispiele sind Rhodium(III)-hexaammin-trichlorid [Rh(NH₃)₆]Cl₃ oder Platin(II)-tetraammin-dichlorid [Pt(NH₃)₄]Cl₂.

Unter der Bezeichnung "PGM-Amin-Komplexe" werden Komplexe der Platingruppenmetalle mit Amino-, Alkylamino-, Dialkylamino-, Hydroxyalkylamino- sowie Alkoxyamino-Liganden zusammengefasst. Bevorzugt werden damit die Liganden Ethylendiamin (Abkürzung in dieser Anmeldung "en") sowie 2-Aminoethanol (Ethanolamin, Abkürzung in dieser Anmeldung "EA") bezeichnet.

Viele der einfachen und kommerziell erhältlichen PGM-Verbindungen, wie beispielsweise Palladiumchlorid (PdCl₂), Hexachloroplatinsäure (H₂PtCl₆) oder Ammin-Verbindungen der Platingruppenmetalle wie Pt(NH₃)₄Cl₂ enthalten Halogenide, insbesondere Chloridionen. Chloridische Lösungen oder Feststoffe der PGMs stellen typischerweise die industriellen Ausgangsprodukte für die Herstellung der entsprechenden höherwertigen Verbindungen dar. Diese chloridhaltigen Lösungen oder Feststoffe werden durch Löseprozesse der reinen Edelmetalle oder aber als Produkte von Edelmetallrecyclingprozessen gewonnen. Die mit diesen Verbindungen hergestellten PGM-haltigen Produkte (beispielsweise Trägerkatalysatoren oder galvanische Bäder) weisen eine Kontamination mit Chloridresten auf, die unter Anderem aus Korrosionsgründen unerwünscht ist. So greifen zum Beispiel chloridhaltige Edelmetall-Bäder in der Galvanotechnik das Anlagenmaterial an. Katalysatoren, die unter Verwendung von chloridhaltigen Precursoren hergestellt werden, können ebenfalls ein korrosive Wirkung besitzen und eine reduzierte Aktivität sowie eine verkürzte Lebensdauer aufweisen.

Darüber hinaus ist bekannt, dass chlorhaltige PGM-Salze, insbesondere chlorhaltige Pt-Salze, gesundheitsgefährdende Eigenschaften aufweisen, und z.B. Allergien auslösen können; sie sind daher aus Gründen des Arbeitsschutzes unerwünscht.

Unter der Bezeichnung "halogenidarm" bzw. "chloridarm" oder "chlorarm" wird im Folgenden ein Gesamthalogenwert bzw. Gesamtchlorgehalt von < 5000 ppm, vorzugsweise < 2000 ppm verstanden (Messung z.B. nach Wickbold-Methode, bezogen auf den jeweiligen Metallgehalt der Zubereitung). Die Halogene umfassen die Gruppe Fluor, Chlor, Brom und Iod, als Halogenide werden die entsprechenden Anionen F⁻, Cl⁻, Br⁻ und I⁻ bezeichnet.

Aus den oben genannten Gründen ist die Suche nach geeigneten, kommerziell attraktiven halogenarmen Verbindungen bzw. Zubereitungen der Platingruppenmetalle ein wichtiges Arbeitsgebiet der industriellen Edelmetallchemie. Auch wenn viele halogenarme Verbindungen, beispielsweise die Nitrate oder Sulfate der Platingruppenmetalle wie Platinnitrat, Rhodiumnitrat, Palladiumsulfat, aber auch komplexere Substanzen, wie [(NH₃)₄Pd](HCO₃)₂ kommerziell verfiigbar sind, so ist doch die Suche nach neuen Substanzen ein kontinuierlich verfolgtes Arbeitsgebiet.

### Stand der Technik

Viele der gemäß Formelbild halogenfreien PGM-Verbindungen weisen aufgrund ihres Herstellprozesses noch hohe Resthalogengehalte auf, die nur durch aufwändige und somit teure Verfahren, z.B. Ionenaustauscherverfahren reduziert werden können. Verschiedene halogenfreie PGM-Verbindungen können nur durch solche Ionenaustauscherverfahren hergestellt werden. Dies trifft vor allem auf Verbindungen von Platin und Rhodium zu; im Fall von Palladium sind die chlorfreien Verbindungen Palladiumnitrat und Palladiumsulfat als wässrige Lösungen direkt zugänglich.

So ist aus der EP 512,960 A1 und der US 5,244,647 ein Verfahren zur Herstellung von chlorarmem Rhodium(III)-hexaammin-trihydroxid [Rh(NH₃)₆](OH)₃ bzw. Platin(II)-tetraammin-dihydroxid [Pt(NH₃)₄](OH)₂ bekannt, das zur Entfernung der Chloridionen ein Verfahren mit Anionenaustauscher verwendet. Dabei wird von den Verbindungen [Rh(NH₃)₆]Cl₃ bzw. [Pt(NH₃)₄]Cl₂ ausgegangen. Auch die Verbindung [Rh(en)₃](OH)₃ ist bekannt und besitzt eine CAS-Nr. 198292-46-5. Die Herstellung dieser Verbindung ist jedoch nicht beschrieben.

In der DD 288065 wird ein Verfahren zur Herstellung von reinem Palladium(II)-tetraammin-dihydrogencarbonat [Pd(NH₃)₄](HCO₃)₂ beschrieben, bei dem ein [Pd(NH₃)₄]X₂ Komplex (X= Cl⁻, NO₃⁻) mit einem Kationenaustauscher und einer Ammoniumhydrogencarbonatlösung umgesetzt wird.

Weitere Beispiele für chlorarme (bzw. chloridarme) PGM-Verbindungen sind Platin(II)-tetraammin-dihydrogencarbonat [Pt(NH₃)₄](HCO₃)₂, Platin(II)-tetraammin-diacetat [Pt(NH₃)₄](CH₃COO)₂, Platin(II)-tetraammin-dinitrat [Pt(NH₃)₄](NO₃)₂ oder Palladium(II)-tetraammin-diacetat [Pd(NH₃)₄](CH₃COO)₂. Hier werden die chlorfreien Salzlösungen jeweils in mehrstufigen Prozessen aus den entsprechenden Hydrogencarbonaten (Feststoffen) gewonnen.

Die EP 2,116,550 B1 beschreibt eine Methode zur Herstellung chlorfreier Komplexe von Palladium(II)-hydrogencarbonat mit Aminliganden, wobei Palladium(II)-tetraammin-dihydrogencarbonat [Pd(NH₃)₄](HCO₃)₂ mit einem organischen Aminliganden unter Entfernung des Ammoniaks umgesetzt wird. Das Verfahren ist mehrstufig und sehr langwierig, da es längere Zeit dauert, bis der Ammoniak vollständig ausgetrieben ist.

A. Syamal und B.K. Gupta (Transition Met. Chem. 8, 280-282, 1983) beschreiben die Herstellung von quadratisch planaren Platin(II)-Komplexen mit N-haltigen Chelatliganden und sauerstoffhaltigen Liganden (wie Oxalat oder Acetat). Letztere sind direkt an das Pt(II)-Zentralatom komplex gebunden, d.h., sie befinden sich innerhalb der Koordinationssphäre des Pt(II)-Zentralatoms. Bei der Herstellung solcher Komplexe (wie beispielsweise Pt(II)(NH₂C₂H₄OH)(CH₃COO)₂, wird von chlorhaltigen Verbindungen wie K₂PtCl₄ ausgegangen. Die von Syamal und Gupta beschriebenen Komplexe unterscheiden sich im Aufbau von den Pt(II)-Komplexen der vorliegenden Erfindung; da bei der Herstellung auch von chlorhaltigen Verbindungen ausgegangen wird, sind auch hier aufwendige Methoden zur Entfernung der Chloridionen notwendig.

Die herkömmlichen halogenfreien PGM-Verbindungen, wie beispielsweise die Nitrate oder Sulfate der Platingruppenmetalle weisen Schwefel- bzw. Stickstoffatome auf, die bei einer Pyrolysereaktion umweltbelastende Schwefel- bzw. Stickoxide freisetzen. Aus diesem Grund sind PGM-Precursorverbindungen bevorzugt, die bei thermischer Belastung eine rückstandsfreie Zersetzung aufweisen und keine N-Atome oder S-Atome besitzen. Zusammenfassend sind die genannten halogenarmen PGM-Verbindungen aufgrund ihrer mehrstufigen Herstellverfahren und der aufwändigen Reinigungsschritte (e.g. Ionenaustauscherverfahren) in der Regel teuer und kommen als Ausgangsprodukte für großtechnische Verfahren kaum infrage.

Es ist daher eine Aufgabe der vorliegenden Erfindung, ein wirtschaftliches und kostengünstiges Verfahren zur Herstellung halogenarmer, insbesondere chlorarmer PGM-Verbindungen und deren wasserhaltigen Zubereitungen und Lösungen bereitzustellen. Diese Zubereitungen bzw. Lösungen sollten einen pH-Wert im Bereich zwischen schwach sauer und basisch aufweisen. Weiterhin sollen Zubereitungen zugänglich gemacht werden, die bisher unbekannte PGM-Komplexe enthalten

Diese Aufgabe wird durch die Bereitstellung des Verfahrens gemäß den beigefügten Ansprüchen gelöst. Weiterhin werden neue PGM-haltige Zubereitungen bereitgestellt, die mit Hilfe des erfindungsgemäßen Verfahrens zugänglich sind.

### Zusammenfassung der Erfindung

Die Erfindung betrifft ein Verfahren zur Herstellung von wasserhaltigen Zubereitungen von Verbindungen und Komplexen der Platingruppenmetalle (PGM), insbesondere der Metalle Platin (Pt), Palladium (Pd), Rhodium (Rh) und Iridium (Ir). Die Erfindung umfasst im Wesentlichen drei Ausführungsformen.

In einer ersten Ausführungsform betrifft die Erfindung ein Verfahren zur Herstellung wasserhaltiger Zubereitungen von Komplexen der Platingruppenmetalle (PGM) mit der allgemeinen Formel (1)

[M^{A}(L)ₐ (H₂O)_{b} (O²⁻)_{c} (OH⁻)_{d}] (OH⁻)ₑ (H⁺)_{f} (1)

worin
M^{A} = Platin (Pt) oder Palladium (Pd) in der Oxidationsstufe +2 vorliegt und
L = ein neutraler einzähniger oder zweizähniger Donorligand sowie
a = eine ganze Zahl von 1 bis 4 (für einzähnige Donorliganden) oder eine ganze Zahl von 1 bis 2 (für zweizähnige Donorliganden),
b = eine ganze Zahl von 0 bis 3,
c = eine ganze Zahl von 0 bis 3,
d = eine ganze Zahl von 0 bis 3,
e = eine ganze Zahl von 0 bis 2 und
f = eine ganze Zahl von 0 bis 4
bedeutet und worin das Platingruppenmetall M^{A} die Koordinationszahl 4 aufweist,
das dadurch gekennzeichnet ist, dass die Hydroxokomplexe H₂Pd^{II}(OH)₄ (im Fall von M^{A}= Pd) oder H₂Pt^{IV}(OH)₆ (im Fall von M^{A} = Pt) jeweils mit einem neutralen Donorliganden L umgesetzt werden, wobei mindestens eine Hydroxogruppe des betreffenden Hydroxokomplexes ausgetauscht wird und die Umsetzung im Fall von M^{A} = Pt in Gegenwart eines Reduktionsmittels durchgeführt wird.

In einer weiteren Ausführungsform betrifft die Erfindung ein Verfahren zur Herstellung wasserhaltiger Zubereitungen von Komplexen der Platingruppenmetalle (PGM) mit der allgemeinen Formel (2)

[M^{B} (L)ₐ (H₂O)_{b} (O²⁻)_{c} (OH⁻)_{d}] (OH⁻)ₑ (H⁺)_{f} (2)

worin
M^{B} = Platin (Pt) in der Oxidationsstufe +4 vorliegt und
L = ein neutraler einzähniger oder zweizähniger Donorligand sowie
a = eine ganze Zahl von 1 bis 6 (für einzähnige Donorliganden) oder eine ganze Zahl von 1 bis 3 (für zweizähnige Donorliganden),
b = eine ganze Zahl von 0 bis 5,
c = eine ganze Zahl von 0 bis 4,
d = eine ganze Zahl von 0 bis 5,
e = eine ganze Zahl von 0 bis 4 und
f = eine ganze Zahl von 0 bis 4
bedeutet und worin das Platingruppenmetall M^{B} die Koordinationszahl 6 aufweist,
das dadurch gekennzeichnet ist, dass der Hydroxokomplex H₂Pt^{IV}(OH)₆ mit einem neutralen Donorliganden L umgesetzt wird, wobei mindestens eine Hydroxogruppe des Hydroxokomplexes ausgetauscht wird. Dabei erfolgt die Umsetzung ohne Zusatz eines Reduktionsmittels.

In einer dritten Ausführungsform betrifft die Erfindung ein Verfahren zur Herstellung wasserhaltiger Zubereitungen von Komplexen der Platingruppenmetalle (PGM) mit der allgemeinen Formel (3)

[M^{C} (L)ₐ (H₂O)_{b} (O²⁻)_{c} (OH⁻)_{d}] (OH⁻)ₑ (H⁺)_{f} (3)

worin
M^{C} = Rhodium (Rh) oder Iridium (Ir) in der Oxidationsstufe +3 vorliegt und
L = ein neutraler einzähniger oder zweizähniger Donorligand sowie
a = eine ganze Zahl von 1 bis 6 (für einzähnige Donorliganden oder eine ganze Zahl von 1 bis 3 (für zweizähnige Donorliganden),
b = eine ganze Zahl von 0 bis 5,
c = eine ganze Zahl von 0 bis 4,
d = eine ganze Zahl von 0 bis 5,
e = eine ganze Zahl von 0 bis 3 und
f = eine ganze Zahl von 0 bis 5
bedeutet und worin das Platingruppenmetall M^{C} die Koordinationszahl 6 aufweist,
das dadurch gekennzeichnet ist, dass ein Hydroxokomplex des Typs H₃M^{C}(OH)₆ mit einem neutralen Donorliganden L umgesetzt wird, wobei mindestens eine Hydroxogruppe des Hydroxokomplexes ausgetauscht wird.

Die Indices a - f in den allgemeinen Formeln (1), (2) und (3) werden dabei so gewählt, dass die resultierenden PGM-Komplexe elektroneutral sind.

Bei allen drei Ausführungsformen der Erfindung erfolgt die Umsetzung in der Regel bei einer Reaktionstemperatur im Bereich von 40 bis 110°C und in einer Reaktionszeit im Bereich von 2 bis 24 Stunden. Bevorzugt sind eine Reaktionstemperatur im Bereich von 45 bis 100°C und eine Reaktionszeit im Bereich von 2.5 bis 20 Stunden.

Bei den oben beschriebenen wasserhaltigen PGM-haltigen Zubereitungen handelt es sich in der Regel um wässrige Lösungen; die Umsetzungen erfolgen vorzugsweise in Wasser als Lösungsmittel. Die wasserhaltigen Zubereitungen können jedoch auch organische, vorzugsweise wassermischbare Lösungsmittel, beispielsweise aliphatische Alkohole (beispielsweise Ethanol, Isopropanol, Butanol etc) und/oder aliphatische Ketone (beispielsweise Aceton, Methylethylketon etc) enthalten. In diesen Fällen kann die Umsetzung auch in solchen wasserhaltigen Lösungsmittelgemischen erfolgen.

In den drei verschiedenenen Ausführungsformen des erfindungsgemäßen Verfahrens muss der Ligandenaustausch der OH-Gruppen in den Hydroxokomplexen H₂Pd(OH)₄, H₂Pt^{IV}(OH)₆ oder H₃M^{C}(OH)₆ (im Falle von M^{C} = Rh^{III} oder Ir^{III}) durch die neutralen Donorliganden L nicht vollständig erfolgen, so dass auch gemischte Komplexe vorliegen können. Diese können neben den neutralen Donorliganden L (Anzahl a) auch Aquo liganden (= neutrale H₂O-Liganden, Anzahl b), Oxo-Liganden (O²⁻Liganden, Anzahl c) sowie Hydroxo-Liganden (OH⁻ Liganden, Anzahl d) aufweisen. Die Elektroneutralität des resultierenden PGM-Komplexes wird durch weitere Hydroxoreste des Typs (OH⁻, Anzahl e) sichergestellt, die außerhalb der Komplexsphäre angesiedelt sind. Diese Hydroxoreste werden in der vorliegenden Anmeldung als "Hydroxygruppen" bzw. "Hydroxidgruppen" bezeichnet. Im Falle von insgesamt anionisch geladenen resultierenden PGM-Komplexen muss zur Sicherstellung der Elektroneutralität die Anwesenheit von Protonen (H⁺, Anzahl f) berücksichtigt werden.

Die erfindungsgemäßen Zubereitungen enthalten PGM-Komplexe, die bei vollständigem Hydroxogruppen-Austausch in der Regel kationisch geladen, bei partiellem Austausch und/oder Anwesenheit von Oxo- bzw. Hydroxoliganden auch anionisch geladen oder neutral sind. Bei den erfindungsgemäßen wasserhaltigen Zubereitungen handelt es sich also in vielen Fällen um mehrkomponentige Gemische von anionischen, kationischen oder neutralen Komplexen.

In allen Ausführungsformen des erfindungsgemäßen Verfahrens erfolgt jedoch der Austausch mindestens einer Hydroxogruppe des jeweiligen Hydroxokomplexes durch einen neutralen Donorliganden L, wodurch beispielsweise die Löslichkeit des resultierenden PGM-Hydroxokomplexes in Wasser bewirkt wird. Die Koordinationszahlen (KZ) für einzähnige Liganden, nämlich 4 (für M^{A} = Pt^{II} und Pd^{II}, allg. Formel (1)) und 6 (für M^{B} = Pt^{IV}, allgemeine Formel (2)) und für M^{C} = Rh^{III} oder Ir^{III}, allg. Formel (3)) werden bei den erfindungsgemäßen Komplexen grundsätzlich eingehalten. Dies gilt bei der Verwendung von zweizähnigen Liganden entsprechend.

### Detaillierte Beschreibung der Erfindung

Nachfolgend soll das erfindungsgemäße Verfahren näher beschrieben werden. Im vorliegenden Verfahren geht man grundsätzlich von den halogenarmen Hydroxokomplexen der Platingruppenelemente aus. Dies sind im Falle von Pt, Pd, Rh und Ir beispielsweise die Ausgangsverbindungen H₂Pt(OH)₆ ("Hexahydroxoplatin(IV)-säure"), H₂Pd(OH)₄, H₃Rh(OH)₆ und H₃Ir(OH)₆. Diese Verbindungen werden in verschiedenen, dem Fachmann bekannten Methoden durch Umsetzung der jeweiligen chlorhaltigen Ausgangssalze mit Laugen wie NaOH, KOH oder Ammoniak in wässriger Lösung und ggf. anschließender Neutralisation hergestellt. Die besten Ergebnisse erhält man bei der Verwendung frisch hergestellter bzw. gefällter Hydroxokomplexe (vgl. Beispiele). In einer anderen Schreibweise wird H₂Pt(OH)₆ als Pt(OH)₄ x 2 H₂O, H₂Pd(OH)₄ als Pd(OH)₂ x 2 H₂O, H₃Rh(OH)₆ als Rh(OH)₃ x 3 H₂O und H₃Ir(OH)₆ als Ir(OH)₃ x 3 H₂O dargestellt. Es handelt sich auch hier in der Regel um komplexe Substanzgemische; die unterschiedlichen Schreibweisen sind jedoch für das Wesen der vorliegenden Erfindung unerheblich.

Die Hydroxokomplexe bzw. Hydroxide der PGMs sind im Allgemeinen in Wasser schwer löslich und können somit leicht abgetrennt und durch gängige Methoden halogenidarm gewaschen werden. Im Fall von H₂Pt(OH)₆ werden Restgehalte an Chlor von < 5000 ppm, bevorzugt < 2000 ppm (jeweils bezogen auf Metall Pt) erreicht. Diese Komplexe stellen damit geeignete Ausgangsprodukte für das erfindungsgemäße Verfahren zur Herstellung von halogenidarmen PGM-Verbindungen dar. Der Chlor-Restgehalt der nach dem vorliegenden Verfahren hergestellten PGM-Verbindungen kann dabei durch den Chlorgehalt der Hydroxo-Ausgangskomplexe eingestellt werden.

Es ist dem Fachmann bekannt, dass bei der Umsetzung des Pt-Hydroxokomplexes H₂Pt(OH)₆ mit Liganden wie Ammoniak oder Ethanolamin regelmäßig das kationische H⁺-Ion ausgetauscht wird und die sechsfache OH-Koordination am Pt-Atom erhalten bleibt. So entstehen beispielsweise bei der Umsetzung von H₂Pt(OH)₆ mit Ammoniak oder Ethanolamin in wässriger Lösung unter milden Bedingungen die entsprechenden Ammoniumsalze der Hexahydroxoplatinsäure, vgl. Gl. (a) und (b):

H₂Pt(OH)₆ + 2 NH₃ => (NH₄)₂ [Pt(OH)]₆ (a)

H₂Pt(OH)₆ + 2 HO-C₂H₄-NH₂ => (HO-C₂H₄-NH₃)₂ [Pt(OH)]₆ (b)

In diesen Fällen wird die Ligandensphäre des Platins nicht verändert. Das PGM befindet sich in einem anionischen (d.h. negativ geladenen) hexa-koordinierten Hydroxokomplex.

Es wurde nun überraschenderweise gefunden, dass unter besonderen Reaktionsbedingungen ein anderer Reaktionsverlauf erfolgt und der Ligand L in die Koordinationssphäre der PGM-Hydroxoverbindung eintritt und somit ein direkter Ligandenaustausch mit den komplex gebundenen OH-Liganden erfolgt. Dies ist umso überraschender, als die PGM-Hydroxide bisher für den Fachmann als unlöslich in Ammoniak galten (unter anderem können die PGM-Hydroxide ja auch durch Fällung mit Ammoniak hergestellt und isoliert werden).

Die erfindungsgemäßen Reaktionen lassen sich exemplarisch durch die folgenden Gleichungen darstellen (wobei jeweils ein vollständiger Ligandenaustausch dargestellt ist).
a) Im Falle von Komplexen des Typs [M^{A}(L)ₐ(H₂O)_{b}(O²⁻)_{c} (OH⁻)_{d}] (OH⁻)ₑ(H⁺)_{f}: für M^{A} = Pd(II), a = 4, b = 0; c = 0; d = 0; e = 2, f = 0: Ligandenaustausch: H₂[Pd^{II}(OH)₄] + 4L => [Pd^{II}L₄](OH)₂ + 2H₂O (c) für M^{A} = Pt(II), a = 4, b = 0; c = 0; d = 0; e = 2, f = 0:
   Reduktion: H₂Pt^{IV}(OH)₆ + 2 e⁻ + 2 H⁺ => H₄Pt^{II}(OH)₆ => H₂[Pt^{II}(OH)₄] + 2 H₂O (d1) Ligandenaustausch: H₂[Pt^{II}(OH)₄] + 4 L => [Pt^{II} L₄](OH)₂ + 2 H₂O (d2)
   Dabei bedeutet L in Gl. (c) und (d2) jeweils ein neutraler, einzähniger Donorligand. Bei der Verwendung eines zweizähnigen Liganden L (beispielsweise en) beträgt a = 2. Als Reduktionsmittel werden in Gl. (d1) vorzugsweise die weiter unten beschriebenen rückstandsfreien Reduktionsmittel verwendet.
b) Im Falle von Komplexen des Typs [M^{B} (L)ₐ (H₂O)_{b} (O²⁻)_{c} (OH⁻)_{d}] (OH⁻)ₑ(H⁺)_{f}: für M^{B} = Pt(IV), a = 6, b = 0, c = 0, d = 0, e = 4, f = 0:
   Ligandenaustausch: H₂[Pt^{IV}(OH)₆]+ 6 L => [Pt^{IV} L₆](OH)₄ + 2 H₂O (d3)
c) Im Falle von Komplexen des Typs [M^{C} (L)ₐ (H₂O)_{b} (O²⁻)_{c} (OH⁻)_{d}] (OH⁻)ₑ (H⁺)_{f}:
   für M^{C} = Rh(III) oder Ir(III); a = 6, b = 0, c = 0, d = 0, e = 3, f = 0:
   Ligandenaustausch: H₃[M^{C}(OH)]₆ + 6 L => [M^{C}L₆](OH)₃ + 3 H₂O (e)

Dabei bedeutet L in den Gleichungen (d3) und (e) jeweils ein neutraler einzähniger Donorligand, bei der Verwendung eines zweizähnigen Liganden L (beispielsweise en) beträgt sinngemäß a = 3.

Zu beachten ist, dass es sich bei den o.a. Reaktionsgleichungen um formale, modellhaft vereinfachte Reaktionsgleichungen handelt, bei denen jeweils ein kompletter Austausch der Hydroxogruppen dargestellt ist. Dies ist jedoch in der Praxis nicht immer der Fall. Wie bereits ausgeführt, ist ein Teilaustausch der Hydroxo-Liganden möglich, insbesondere da die Produkte in wässriger Lösung vorliegen. Daher können neben den genannten neutralen Donorliganden L auch andere Donorliganden wie neutrale Aquoliganden (H₂O) oder Oxo-Liganden (O²⁻) oder Hydroxoliganden an das zentrale PGM koordiniert sein. Dies kann beispielsweise im Falle von Rh(III) zu Gemischen führen, in denen neben dem Hauptprodukt [Rh(NH₃)₆](OH)₃ (a = 6, e = 3) weitere, OHteilsubstituierte kationische Komplexe wie [Rh(NH₃)₅(OH)](OH)₂ oder [Rh(NH₃)₄(OH)₂](OH) (mit a = 4, b = 0, c = 0, d = 2; e = 1, f= 0) vorliegen. Es können aber auch nach außen hin neutrale Komplexe wie [Rh(NH₃)₃(OH)₃] oder auch einfach anionische Komplexe wie H[Rh(NH₃)₂(OH)₄]⁻ (mit a = 2, b = 0, c = 0, d = 4; e = 0, f = 1) gebildet werden (vgl. Beispiel 5).

Weiterhin können auch teilsubstituierte Aquokomplexe auftreten, in denen die neutralen Donorliganden teilweise durch H₂O-Moleküle ersetzt sind. Dies kann beispielsweise bei Pt(IV) zu Gemischen führen, in denen neben dem Hauptprodukt [Pt(NH₃)₆](OH)₄ teilsubstituierte Aquokomplexe wie [Pt(NH₃)₅(H₂O)](OH)₄, [Pt(NH₃)₄(H₂O)₂](OH)₄ oder [Pt(NH₃)₃(H₂O)₃](OH)₄ vorliegen. Dies gilt sinngemäß auch für die übrigen Platingruppenmetalle der hier beschriebenen Erfindung.

Aus Gründen der Übersichtlichkeit und der Vereinfachung wird in der vorliegenden Anmeldung jedoch in der Regel von einem vollständigen Austausch der OH-Liganden im betreffenden PGM-Hydroxokomplex durch den/die neutralen Donorliganden L ausgegangen und das jeweils dadurch entstandene Hauptprodukt angegeben.

Die genannten PGM-Komplexe werden bei den erfindungsgemäßen Umsetzungen in der Regel in voll entsalztem (VE) Wasser oder in einem wasserhaltigen Lösungsmittelgemisch gelöst bzw. dispergiert und der Ligand L zugesetzt.

Das Verfahren der vorliegenden Anmeldung ermöglicht eine andere Koordinationschemie der Platingruppenmetalle: In einer bevorzugten Ausführungsform öffnet es die Tür für halogenarme Platin(II)- oder Palladium(II)-Komplexe sowie für halogenarme Rhodium (III)- bzw. Iridium(III)-Komplexe. Bei diesen Verbindungen kann das PGM in einem kationischen (= positiv geladenen), neutralen oder in einem schwach anionischen (= negativ geladenen) Komplex vorliegen. Sollte das Anion als Hydroxid-Anion (OH⁻) ausserhalb der Komplexsphäre vorliegen, kann es in diesem Fall in einem weiteren Schritt gegen andere Anionen ausgetauscht werden. Das erfindungsgemäße Verfahren umfasst daher grundsätzlich einen Ligandenaustausch (im Falle von M^{A} = Pt(II) begleitet von einer Reduktion), optional gefolgt von einem weiteren Schritt, in dem das außerhalb der Komplexsphäre gebundene OH-Anion durch ein alternatives Anion ausgetauscht wird (nachfolgend kurz als "Anionenaustausch" bezeichnet).

Die einzelnen Schritte des erfindungsgemäßen Verfahrens werden nachfolgend erläutert.

### a) Ligandenaustausch

Im erfindungsgemäßen Verfahren erfolgt der Ligandenaustausch (d.h. die Umsetzung mit dem Donorliganden L) bei erhöhten Temperaturen und über einen längeren Zeitraum. Die Temperaturen liegen dabei im Bereich von 40 bis 110°C, vorzugsweise im Bereich von 45 bis 100°C. Die Reaktionszeit liegt im Bereich von 2 bis 24 h, vorzugsweise im Bereich von 2.5 bis 20 h. Man arbeitet bevorzugt in wässriger Lösung, wie bereits erwähnt können auch organische Lösungsmittel, z.B. aliphatische Alkohole und/oder aliphatische Ketone, ggf. in einem Gemisch mit Wasser, eingesetzt werden.

In der Regel wird der Ligand L im jeweiligen stöchiometrischen Verhältnis zum Reaktionsgemisch zugegeben, ggf. kann der Ligand L auch in überstöchiometrischen Mengen zugesetzt werden. Dies ist beispielsweise bei Ammoniak (NH₃) der Fall, um Verdampfungsverluste bei längeren Reaktionszeiten auszugleichen.

Als Ligand L sind einzähnige oder zweizähnige, neutrale Donorliganden geeignet. die jeweils 2 Elektronen (bei einzähnigen Liganden) oder 4 Elektronen (bei zweizähnigen Liganden) zur Verfügung stellen.

Als einzähnige Donorliganden werden in der Regel Liganden aus der Gruppe der Monoalkylamine, Dialkylamine, Trialkylamine, Monoalkanolamine, Dialkanolamine, Trialkanolamine, Monoarylamine, Diarylamine, Triarylamine, Trialkylphosphine, Triarylphosphine, Trialkoxyphosphine, Triaryloxyphosphine (Triarylphosphite) oder Gemische davon oder Ammoniak eingesetzt. Beispiele für bevorzugte einzähnige Liganden sind die stickstoffhaltigen Liganden Ammoniak (NH₃), Ethylamin, Diethylamin, Ethanolamin ("EA") oder Isopropanolamin. Beispiele für geeignete P-haltige einzähnige Donorliganden sind Triphenylphosphin, Tricyclohexylphosphin und Phosphite wie Triphenylphosphit.

Als zweizähnige Donorliganden kommen jeweils Liganden aus der Gruppe der Alkylendiamine, Arylendiamine, Alkylendiphosphine oder Arylendiphosphine oder Gemische davon zum Einsatz. Beispiele für bevorzugte zweizähnige Liganden sind Ethylendiamin ("en"), o-Phenylendiamin, Trimethylendiamin, Tetramethylendiamin, Pentamethylendiamin, Hexamethylendiamin oder 1,2-Propylendiamin. Ein Beispiel für einen geeigneten zweizähnigen P-haltigen Ligand ist 1,2-bis(diphenylphosphino)-ethan.

Sinngemäß können auch dreizähnige oder mehrzähnigie Donorliganden zum Einsatz kommen. Beispiele für dreizähnige Liganden sind Diethylentriamin (H₂N-CH₂-CH₂-NH-CH₂-CH₂-NH₂, DETA) oder Dipropylentriamin. Beispiele für mehrzähnige Liganden sind Trimethylentetramin oder Hexamethylentetramin. Die Zahlenwerte des Parameters a sind dabei entsprechend anzupassen. Auch Mischungen der oben genannten Liganden sind möglich.

Besonders bevorzugt werden stickstoffhaltige ein- oder zweizähnige Donorliganden verwendet. Ganz besonders bevorzugt werden die Liganden Ammoniak (NH₃), Ethanolamin ("EA"), Ethylendiamin ("en") oder Gemische davon eingesetzt. Beispiele für über einen Ligandenaustausch hergestellte erfindungsgemäße wasserhaltige Zubereitungen sind Zubereitungen, die als Hauptprodukt Komplexe der folgenden Zusammensetzung enthalten:

| | |
|---|---|
| für M^{A}= Pd(II): | [Pd(NH₃)₄](OH)₂, [Pd(en)₂](OH)₂ |
| Für M^{B} = Pt(IV): | [Pt(EA)₆](OH)₄ |
| Für M^{C} = Rh(III), Ir (III): | [Rh(NH₃)₆](OH)₃, [Rh(en)₃](OH)₃, [Ir(en)₃](OH)₃. |

### b) Reduktion

Ein Spezialfall stellt die Herstellung von halogenidarmen Pt(II)-Verbindungen dar. Erfindungsgemäß geht man hierbei von dem Pt-Hydroxokomplex in der Oxydationsstufe +IV (also von H₂Pt^{IV}(OH)₆) aus und setzt diesen mit dem Liganden L in Gegenwart eines Reduktionsmittels um, wobei das vierwertige Pt(IV) zu zweiwertigem Pt(II) reduziert wird. Die hierzu geeigneten Reduktionsmittel sind dem Fachmann bekannt; vorzugsweise verwendet man sogenannte "rückstandsfreie" Reduktionsmittel, d.h. solche, die nach der Reduktionsreaktion keine bzw. geringe Rückstände in der Produktlösung hinterlassen und in der Regel nicht abgetrennt werden müssen. Beispiele für solche "rückstandsfreien" Reduktionsmittel sind Wasserstoff (H₂) bzw. wasserstoffhaltige Gemische wie Formiergas 80/20 oder 95/5; weiterhin Hydrazin (N₂H₄), Formaldehyd (HCHO), Oxalsäure (H₂C₂O₄) oder Ameisensäure (HCOOH). Zur Reduktion von Pt(IV) zu Pt(II) wird das Reduktionsmittel im redox-äquivalenten Verhältnis 1:1 1 bis 2:1 (bezogen auf Pt) zugegeben. Vorzugsweise werden äquivalente Mengen an Reduktionsmittel verwendet, dabei erfolgt die Zugabe in der Regel gleichzeitig mit der Zugabe des/der Liganden in wässriger Lösung.

Beispiele für solche, über einen Ligandenaustausch und gleichzeitige Reduktion hergestellten erfindungsgemäßen Zubereitungen sind Zubereitungen, die Pt(II)-Komplexe der folgenden Zusammensetzung als Hauptprodukt enthalten:

[Pt(en)₂](OH)₂, [Pt(NH₃)₄](OH)₂, [Pt(EA)₄](OH)₂

### c) Anionenaustausch

Das erfindungsgemäße Verfahren kann weiterhin eine Substitution der Hydroxy-Anionen des Typs (OH⁻)ₑ in den Komplexen der allgemeinen Formeln

[M^{A}(L)ₐ (H₂O)_{b} (O²⁻)_{c} (OH⁻)_{d}] (OH⁻)ₑ (H⁺)_{f} (1)

[M^{B} (L)ₐ (H₂O)_{b} (O²⁻)_{c} (OH⁻)_{d}] (OH⁻)ₑ (H⁺)_{f} (2)

[M^{C} (L)ₐ (H₂O)_{b} (O²⁻)_{c} (OH⁻)_{d}] (OH⁻)ₑ (H⁺)_{f} (3)

durch eines oder mehrere Anionen anorganischer oder organischer Säuren umfassen. In den angegebenen Formeln (1), (2) und (3) ist die Bedeutung von M^{A}, M^{B}, M^{C}, L, a, b, c, d, e und f wie in den vorigen Abschnitten bereits definiert. Bei diesem Anionenaustausch erfolgt im Prinzip eine Neutralisation, d.h. ein Austausch der Hydroxy-Anionen (OH⁻)ₑ durch die entsprechenden Säureanionen; es wird Wasser gebildet. Zur Durchführung des Anionenaustausches sollten kationische Komplexe vorliegen, wobei Index e ≠ 0 sein muss. Bevorzugt ist e eine ganze Zahl von 1 bis 4, besonders bevorzugt ist e = 2, 3 oder 4 sowie f = 0.

Geeignete Säuren sind beispielsweise Essigsäure (CH₃COOH), Ameisensäure, Oxalsäure (H₂C₂O₄) oder Kohlensäure (bzw. Carbonate und Hydrogencarbonate), aber auch Schwefelsäure, Phosphorsäure, Tetrafluorborsäure (HBF₄) oder Salpetersäure. Als Anionen anorganischer oder organischer Säuren können solche aus der Gruppe der Acetate, Formiate, Oxalate, Carbonate, Hydrogencarbonate, Sulfate, Nitrate, Phosphate, Tetrafluorborate oder deren Gemische eingesetzt werden.

Vorteilhafterweise werden äquimolare Mengen dieser Säuren mit den basischen PGM-Hydroxy-Komplexen in wässriger bzw. wasserhaltiger Lösung bzw. Zubereitung umgesetzt. Die Reaktionstemperaturen liegen in der Regel im Bereich von 25 bis 100°C, geeignete Reaktionszeiten liegen im Bereich von 30 min bis 3 Stunden. Man erhält so halogenarme, saure bis neutrale PGM-Verbindungen, die in der Regel in wässriger Lösung bzw. Zubereitung vorliegen und in dieser Form weiter verarbeitet werden.

Dieser Anionenaustausch lässt sich beispielsweise für die Hydroxyverbindungen des Typs [M^{A}(L)ₐ](OH)₂ (M^{A} = Pt^{II}, Pd^{II}, b = c = d = f = 0, e = 2) schematisch durch die Gleichung (f) darstellen:

[M^{A}(L)ₐ](OH)₂ + 2 H⁺X⁻ => [M^{A}(L)ₐ]²⁺ X₂ + 2 H₂O (f)

Dabei stellt X⁻ ein einfach negativ geladenes Säureanion dar, wie beispielsweise HCO₃⁻, CH₃COO⁻, HCOO⁻ oder NO₃⁻. Für zweifach negativ geladenen Anionen Y²⁻ (zum Beispiel CO₃²⁻, C₂O₄²⁻, SO₄²⁻) lässt sich der Anionenaustausch entsprechend Gleichung (g) darstellen:

[M^{A}(L)ₐ](OH)₂ + (H⁺)₂Y²⁻ => [M^{A}(L)ₐ]²⁺ Y + 2 H₂O (g)

In analoger Weise erfolgt der Anionenaustausch auch bei den PGM-Hydroxyverbindungen des Typs [M^{B}(L)ₐ]⁴⁺(OH)₄ (M^{B} = Pt^{IV}, b = c = d = f = 0, e = 4) und [M^{C}(L)ₐ]³⁺(OH)₃ (M^{C} = Rh, Ir, b = c = d = f = 0, e = 3) sowie sinngemäß auch für dreifach negativ geladene Anionen wie beispielsweise PO₄³⁻.

Beispiele für solche, über einen Anionenaustausch hergestellte erfindungsgemäßen wasserhaltigen Zubereitungen sind Zubereitungen, die als Hauptprodukt Komplexe der folgenden Zusammensetzung enthalten:

| | |
|---|---|
| für M^{A}= Pd(II): | [Pd(NH₃)₄](HCO₃)₂, [Pd(en)₂](CH₃COO)₂, [Pd(NH₃)₄]SO₄ |
| für M^{B} = Pt(II): | [Pt(en)₂](CO₃), [Pt(EA)₄](C₂O₄), [Pt(EA)₄] (CH₃COO)₂ |
| | [Pt(NH₃)₄](HCO₃)₂, [Pt(EA)₄]CO₃, [Pt(EA)₄](HCO₃)₂ |
| Für M^{B} = Rh(III) | [Rh(NH₃)₆](CH₃COO)₃ |
| Für M^{B} = Ir(III) | [Ir(NH₃)₆](PO₄)₃ |

### Charakterisierung der Komplexe

Bei den Verbindungen und Komplexen der vorliegenden Erfindung handelt es sich in den meisten Fällen um Gemische, wobei unterschiedlich koordinierte PGM-Komplexe in wasserhaltiger oder wässriger Zubereitung bzw. Lösung nebeneinander vorliegen. Die Konzentration des jeweiligen PGM (Pt, Pd, Rh oder Ir) liegt dabei im Bereich von 0.5 bis 15 Gew.-% (bezogen auf das Gesamtgewicht der Zubereitung bzw. Lösung).

Die erfindungsgemäßen halogenarmen wasserhaltigen bzw. wässrigen Zubereitungen, Gemische oder Lösungen weisen in der Regel einen schwach sauren bis basischen pH-Wert auf. So liegt der pH-Wert der erfindungsgemäßen wasserhaltigen Zubereitungen im Bereich pH 5 bis 14, vorzugsweise im Bereich pH 7 bis 14 und besonders bevorzugt im Bereich pH 7 bis 12.

Die Charakterisierung der Zubereitungen bzw. Lösungen und Komplexe erfolgt durch konventionelle analytische Verfahren wie beispielsweise KapillarElektrophorese; die Bestimmung des Pt-, Pd-, Rh- oder Ir- Gehaltes kann mittels ICP ("inductive coupled plasma") oder durch graphimetrische Verfahren durchgeführt werden.

### ¹⁹⁵Pt-NMR-Spekroskopie

Die Koordinationssphäre der erfindungsgemäßen PGM-Komplexe lässt sich im Falle von Platin mittels ¹⁹⁵Pt-NMR-Spekroskopie ermitteln. Die Messungen werden mit einem BRUKER AVANCE 400 (Fa. Bruker BioSpin GmbH, Rheinstetten, DE) durchgefiihrt; als externe Referenz (δ = 0 ppm) wird H₂PtCl₆ in D₂O verwendet, als "locking solvent" wird eine DMSO-Kapillare eingesetzt. Die chemischen Verschiebungen der erfindungsgemäßen Pt(II)-Komplexe finden sich im Bereich von δ = - 2000 bis - 3200 ppm. In der erfindungsgemäß hergestellten [Pt(NH₃)₄](OH)₂-Lösung kann beispielsweise die Existenz des quadratisch planaren [Pt(NH₃)₄]²⁺- Kations durch das Signal bei δ = - 2576 ppm nachgewiesen werden.

### Bestimmung des Chlorgehalts

Typischerweise liegt der Chlorgehalt der erfindungsgemäßen PGM-haltigen Zubereitungen im Bereich < 5000 ppm, vorzugsweise < 2000 ppm (Gesamtchlorgehalt, bezogen auf den jeweiligen PGM-Gehalt). Die Bestimmung des Chlorgehalts erfolgt gemäß einem Verfahren, welches die Schritte beinhaltet: (1) Aufnehmen der Probe in einem geeigneten Lösungsmittel, (2) Verbrennen in einer Knallgasflamme, (3) Auffangen des Kondensats in Natronlauge und (4) Bestimmung des Chlorgehalts durch Ionenchromatographie (IC). Dieses Verfahren ist unter der Bezeichnung "Gesamtchloranalyse nach Wickbold" bekannt. Es sind aber auch andere, äquivalente Verfahren anwendbar.

Die wasserhaltigen, PGM-haltigen Zubereitungen bzw. Lösungen finden in vielen Einsatzbereichen Verwendung. Sie können als PGM-Precursoren, beispielsweise in galvanischen Bädern oder zur Herstellung von homogenen oder heterogenen Katalysatoren eingesetzt werden. Weiterhin können Sie zur Erzeugung hochreiner PGM-haltiger Pulver sowie zur Herstellung weiterer Komplexverbindungen verwendet werden.

Die nachfolgenden Beispiele sollen die Erfindung näher beschreiben ohne jedoch ihren Schutzbereich einzuschränken.

### Allgemeine Vorbemerkungen

Die nachfolgend beschriebenen Reaktionen und Umsetzungen werden unter Luftatmosphäre durchgeführt, wobei als Lösungsmittel voll entsalztes Wasser (VE-Wasser) verwendet wird. In der Regel werden Glaskolben mit Rückflusskühler und Tropftrichter eingesetzt.

Die PGM-Hydroxokomplexe H₂Pt(OH)₆ bzw. Pt(OH)₄ x 2 H₂O) ("Hexahydroxoplatin(IV)-säure"), H₂Pd(OH)₄ bzw Pd(OH)₂ x 2 H₂O, H₃Rh(OH)₆ bzw. Rh(OH)₃ x 3 H₂O, und H₃Ir(OH)₆ bzw. Ir(OH)₃ x 3 H₂O werden in der Regel vor der jeweiligen Umsetzung frisch hergestellt. Hierzu werden die Hydroxide durch Fällung aus chloridischer Lösung mittels Alkali/Erdalkalihydroxid oder Ammoniak gefällt, abgetrennt und mit VE-Wasser halogenidarm gewaschen. Dem Fachmann auf dem Gebiet der Edelmetallchemie sind die entsprechenden Methoden und Arbeitsabläufe bekannt.

### Beispiel 1

### Platin(II)-(tetraammin)-Hydroxid-Lösung

5 g Pt (25.6 mmol) als H₂Pt(OH)₆ (frisch gefällt, Hersteller Umicore AG & Co KG, Hanau) werden in 150 g 25%-iger Ammoniaklösung und 100 mL VE-Wasser in einem Glaskolben mit Rückflusskühler vorgelegt und erwärmt. Bei einer Temperatur von 40°C erfolg die Zugabe von 1.19 g Ameisensäure (25.6 mmol) in 50 mL Wasser verdünnt. Die Reaktionsmischung wird über Nacht (ca. 16 h) erhitzt (T= 70 - 80°C). Es entsteht eine klare, farblose Lösung mit geringen Anteilen an ausreduziertem Platin als grauem Feststoff. Die Analyse der überstehenden klaren Lösung ergibt einen Gehalt von 1.58 Gew.-% Pt; dies entspricht einer Ausbeute von 92% (bezogen auf das eingesetzte Pt). Mit Hilfe der Kapillarelektrophorese wird in der hergestellten Lösung das [Pt^{II}(NH₃)₄]²⁺ Kation identifiziert (Signal bei einer Retentionszeit von 2 bis 2.5 min).

Weiterhin wird mittels ¹⁹⁵Pt-NMR-Spekroskopie die Existenz des [Pt(NH₃)₄]²⁺-Kations nachgewiesen (chemical shift bei δ = - 2576 ppm). Der Gesamtchlorgehalt der wässrigen Platin(II)-(tetraammin)-Hydroxid-Lösung beträgt 560 ppm bezogen auf Platin (Methode nach Wickbold).

### Beispiel 2

### Platin(II)-bis-(ethylendiamin)-Hydroxid-Lösung

5 g (25.6 mmol) Pt als H₂Pt(OH)₆ (Hersteller Umicore AG & Co KG, Hanau) werden mit 3.08 mL (51.2 mmol) Ethylendiamin (zur Synthese, Merck) und 100 mL VE-Wasser in einem Glaskolben mit Rückflusskühler vorgelegt und unter Rühren erhitzt. Bei 60°C werden 1.19 g Ameisensäure (25.6 mmol) in 50 mL Wasser verdünnt über einen Tropftrichter zugegeben. Die Reaktionsmischung wird über Nacht (ca. 15 h) bei 75°C erhitzt. Es entsteht eine gelb-orange Lösung. Der Pt-Gehalt der Lösung beträgt 0.58 Gew.-%, dies entspricht einer Ausbeute von 32% des eingesetzten Platins.

### Beispiel 3

### Palladium(II)-(tetraammin)-Hydroxid-Lösung

10.0 g (0.094 mol) Palladium in Form von 41 g frisch gefälltem und chloridfrei gewaschenem feuchtem Palladiumhydroxid (Pd(OH)₂ x 2 H₂O; Hersteller Umicore AG & Co KG, Hanau) werden in einen tarierten 250 mL Dreihalskolben überführt und mit VE-Wasser auf eine Gesamtmenge von 50 g aufgefüllt. Unter Rühren werden 35.5 mL 25%-ige Ammoniaklösung zugegeben. Anschließend wird die Lösung unter Rühren am Rückfluss auf 65°C erhitzt und bei dieser Temperatur 2.5 Stunden gehalten. Die entstandene Lösung wird auf Raumtemperatur (ca. 23°C) abgekühlt, mit 0.2 g Aktivkohle (Norit SC) versetzt und bei Raumtemperatur eine Stunde gerührt. Es wird über einen Blaubandfilter filtriert und mit 10 mL VE-Wasser nachgewaschen. Man erhält 87.2 g einer gelb-orange gefärbten Lösung. Die Lösung enthält 11.13 Gew.-% Pd. Dies entspricht einer Ausbeute 97.05% bezogen auf eingesetztes Palladium. Der Gesamtchlorgehalt der Lösung beträgt 809 ppm (bezogen auf Pd).

Die Kapillarelektrophorese beweist die Anwesenheit des [Pd(NH₃)₄]²⁺-Kations durch Quervergleich mit Pd(NH₃)₄-Verbindungen, die nach konventioneller Methode hergestellt wurden (d.h. Hauptsignal bei einer Retentionszeit von 2.5 min).

### Beispiel 4

### Palladium(II)-bis-(ethylendiamin)-Hydroxid-Lösung

10.0 g (0.093 mol) Palladium in Form von ca. 37 g frisch gefälltem und chloridfrei gewaschenem feuchtem Palladiumhydroxid (Pd(OH)₂ x 2 H₂O; Hersteller Umicore AG & Co KG, Hanau) werden in einem tarierten Dreihalskolben vorgelegt und mit VE-Wasser auf eine Gesamtmasse von 70 g aufgefüllt. Der Dreihalskolben wird mit einem Rückflusskühler versehen, die Reaktionsmischung mittels eines Magnetrührers gerührt, und durch ein Ölbad temperiert. Die Ölbadtemperatur beträgt ca. 23°C. In einem Becherglas werden 11.2 g Ethylendiamin (0.186 mol; zur Synthese, Merck) mit 12.4 g VE-Wasser gemischt und auf eine Temperatur von ca. 18 - 20°C gekühlt (Wasser/Eis-Bad).

Die wässrige Ethylendiaminlösung wird zur gerührten Palladiumhydroxidsuspension in einer Portion gegeben. Durch Einstellen einer Ölbadtemperatur von 45°C wird die Reaktionsmischung für 18 h unter Rühren erwärmt. Die resultierende gelborangefarbene, weitgehend klare Lösung wird auf Raumtemperatur (ca. 23°C) abgekühlt. Anschließend werden 0.5 g Aktivkohle (Norit SC, Norit Deutschland GmbH) zugegeben und die Mischung 1 h bei Raumtemperatur gerührt. Nachfolgend wird über Blaubandfilter abfiltriert. Der Reaktionskolben wird mit 10 mL VE-Wasser ausgespült und dieses Wasser über den Blaubandfilter mit Aktivkohle abfiltriert und zur Produktlösung gegeben. Man erhält 98.7 g einer gelben klaren Lösung. Die Lösung enthält 9.94 Gew.-% Pd. Dies entspricht einer Ausbeute von 98.1 % bezogen auf eingesetztes Palladium. Der Gesamtchlor-Gehalt der Lösung beträgt 804 ppm bezogen auf Palladium.

### Beispiel 5

### Rhodium(III)-(hexaammin)-Hydroxid-Lösung

9.92 g Rhodium (0.0964 mol) in Form von ca. 31.4 g feuchtem, frisch gefälltem halogenidarm gewaschenem Rhodiumhydroxid (H₃Rh(OH)₆ bzw. Rh(OH)₃ x 3 H₂O, Hersteller Umicore AG & Co KG, Hanau) werden in einem 250 mL Dreihalskolen mit VE-Wasser versetzt, so dass das Gesamtgewicht der vorgelegten Suspension 75 g beträgt. Der Kolben wird mit Magnetrührer und Rückflusskühler ausgestattet und unter Rühren bei Raumtemperatur in einer Portion mit 44 mL 25%-igen Ammoniaklösung (entsprechend 11 g NH₃ = 0.65 mol) versetzt. Es wird unter Rühren auf eine Innentemperatur von 75°C erhitzt und die Lösung für 20 Stunden bei dieser Temperatur erhitzt Anschließend wird das Reaktionsgemisch auf Raumtemperatur (ca. 23°C) mittels eines Wasser/Eis-Bades abgekühlt und mit 0.5 g Aktivkohle (Norit SC) versetzt. Es wird 1 h bei Raumtemperatur gerührt und anschließend über ein Blaubandfilter filtriert. Der Reaktionskolben wird mit 10 mL VE-Wasser ausgespült und dieses über den Filter zum Reaktionsgemisch gegeben. Es resultieren 116.1 g einer klaren orangefarbenen Lösung. Die Lösung enthält 8.34 Gew.-% Rh. Dies entspricht einer Ausbeute von 97.6 % bezogen auf eingesetztes Rhodium. Der Gesamtchlorgehalt der Lösung beträgt 1210 ppm (bezogen auf Rh).

Die Kapillarelektrophorese zeigt drei Signale; ein Signal (1) im schwach anionischen Bereich, ein kleines Signal (2) am Neutralpunkt und ein mittelstarkes Signal (3) im kationischen Bereich. Dies weist auf ein Produktgemisch hin, bei dem einige Hydroxoliganden durch NH₃ ausgetauscht wurden, diese jedoch nicht vollständig. Neben der Zielverbindung [Rh(NH₃)₆](OH)₃ (Signal (3)) kann der neutrale teilsubstituierte Komplex [Rh(NH₃)₃(OH)₃] (Signal (2)) vorliegen. Die Signallage des anionischen Komplexes (1) weist auf eine nur geringe negative Ladung hin und kann dem Komplex H[Rh(NH₃)₂(OH)₄]⁻ zugeordnet werden.

### Beispiel 6

### Rhodium(III)-tris-(ethylendiamin)-Hydroxid-Lösung

200 g Rhodium (1.94 mol) in Form von 711.7 g feuchtem, frisch gefälltem und halogenidarm gewaschenem Rhodiumhydroxid (H₃Rh(OH)₆ bzw. Rh(OH)₃ x 3 H₂O, Hersteller Umicore AG & Co KG, Hanau) werden in einem tarierten 2 L Dreihalskolben mit VE-Wasser versetzt, so dass das Gesamtgewicht der vorgelegten Suspension 1000 g beträgt. Der Kolben wird mit KPG-Rührer und Rückflusskühler ausgestattet und unter Rühren bei Raumtemperatur in einer Portion mit 350.5 g (5.82 mol) Ethylendiamin (zur Synthese, Merck) versetzt. Durch Anlegen einer Ölbadtemperatur von 60°C wird die Reaktionsmischung unter Rühren erwärmt. Innerhalb von drei Stunden wird die Ölbadtemperatur langsam auf 90°C angehoben. Ab ca. 74°C beobachtet man eine leicht exotherme Reaktion und der Feststoff beginnt sich zu lösen. Nach 3 h wird die Reaktionsmischung mittels eines Wasser/Eis-Bades auf Raumtemperatur (ca. 23°C) abgekühlt und mit 5 g Aktivkohle (Norit SC) versetzt. Die Reaktionsmischung wird 1 h bei Raumtemperatur gerührt und anschließend über einen Blaubandfilter filtriert. Der Reaktionskolben wird mit 100 mL VE-Wasser ausgewaschen und dieses über den Filter zur Reaktionsmischung gegeben. Es resultieren 1814.4 g einer klaren orangefarbenen Lösung. Die Lösung enthält 11.0 Gew.-% Rh. Damit erhält man eine Rh-basierte isolierte Ausbeute von 99.8%. Der Gesamtchlorgehalt der Lösung beträgt 910 ppm (bezogen auf Rhodium).

Die Kapillarelektrophorese zeigt zwei kationische Signale, die den Verbindungen [Rh(en)₃](OH)₃ (Hauptsignal) und [Rh(en)₂(OH)₂]OH (schwaches Signal) zugeordnet werden können.

### Beispiel 7

### Rhodium(III)-tris-(ethylendiamin)-Acetat-Lösung

5.06 g Rhodium (49.2 mmol) in Form von 50.0 g Rhodium(III)(tris-ethylendiamin)-Hydroxid-Lösung (ca. 10 Gew.-% Rh, hergestellt nach Beispiel 6) werden in einem 100 mL Dreihalskolben eingewogen. Unter Rühren werden bei Raumtemperatur (ca. 23°C) 10.58 mL 100%-ige Essigsäure langsam zugetropft, bis ein pH-Wert von 7 erreicht ist. Die Zutropfdauer beträgt etwa 30 min; es tritt eine leichte Wärmeentwicklung auf. Der Rh-Gehalt der erhaltenen klaren gelben Lösung beträgt 8.2 Gew.-%.

## Patentansprüche

1. Verfahren zur Herstellung wasserhaltiger Zubereitungen von Komplexen der Platingruppenmetalle (PGM) mit der allgemeinen Formel (1)
[M^{A}(L)ₐ (H₂O)_{b} (O²⁻)_{c} (OH⁻)_{d}] (OH⁻)ₑ (H⁺)_{f} (1)
worin
M^{A} = Platin (Pt) oder Palladium (Pd) in der Oxidationsstufe +2 vorliegt und
L = ein neutraler einzähniger oder zweizähniger Donorligand sowie
a = eine ganze Zahl von 1 bis 4 (für einzähnige Donorliganden) oder eine ganze Zahl von 1 bis 2 (für zweizähnige Donorliganden),
b = eine ganze Zahl von 0 bis 3,
c = eine ganze Zahl von 0 bis 3,
d = eine ganze Zahl von 0 bis 3,
e = eine ganze Zahl von 0 bis 2 und
f = eine ganze Zahl von 0 bis 4
bedeutet und worin das Platingruppenmetall M^{A} die Koordinationszahl 4 aufweist,
**dadurch gekennzeichnet, dass** die Hydroxokomplexe H₂Pd(OH)₄ (im Fall von M^{A}= Pd) oder H₂Pt(OH)₆ (im Fall von M^{A} = Pt) jeweils mit einem neutralen Donorliganden L umgesetzt werden, wobei mindestens eine Hydroxogruppe des betreffenden Hydroxokomplexes ausgetauscht wird und die Umsetzung im Fall von M^{A} = Pt in Gegenwart eines Reduktionsmittels durchgeführt wird.

2. Verfahren zur Herstellung wasserhaltiger Zubereitungen von Komplexen der Platingruppenmetalle (PGM) mit der allgemeinen Formel (2)
[M^{B} (L)ₐ (H₂O)_{b} (O²⁻)_{c} (OH⁻)_{d}] (OH⁻)ₑ (H⁺)_{f} (2)
worin
M^{B} = Platin (Pt) in der Oxidationsstufe +4 vorliegt und
L = ein neutraler einzähniger oder zweizähniger Donorligand sowie
a = eine ganze Zahl von 1 bis 6 (für einzähnige Donorliganden) oder eine ganze Zahl von 1 bis 3 (für zweizähnige Donorliganden),
b = eine ganze Zahl von 0 bis 5,
c = eine ganze Zahl von 0 bis 4,
d = eine ganze Zahl von 0 bis 5,
e = eine ganze Zahl von 0 bis 4 und
f = eine ganze Zahl von 0 bis 4
bedeutet und worin das Platingruppenmetall M^{B} die Koordinationszahl 6 aufweist,
**dadurch gekennzeichnet, dass** der Hydroxokomplex H₂Pt(OH)₆ mit einem neutralen Donorliganden L umgesetzt wird, wobei mindestens eine Hydroxogruppe des Hydroxokomplexes ausgetauscht wird.

3. Verfahren zur Herstellung wasserhaltiger Zubereitungen von Komplexen der Platingruppenmetalle (PGM) der allgemeinen Formel (3)
[M^{C} (L)ₐ (H₂O)_{b} (O²⁻)_{c} (OH⁻)_{d}] (OH⁻)ₑ (H⁺)_{f} (3)
worin
M^{C} = Rhodium (Rh) oder Iridium (Ir) in der Oxidationsstufe +3 vorliegt und
L = ein neutraler einzähniger oder zweizähniger Donorligand sowie
a = eine ganze Zahl von 1 bis 6 (für einzähnige Donorliganden oder eine ganze Zahl von 1 bis 3 (für zweizähnige Donorliganden),
b = eine ganze Zahl von 0 bis 5,
c = eine ganze Zahl von 0 bis 4,
d = eine ganze Zahl von 0 bis 5,
e = eine ganze Zahl von 0 bis 3 und
f = eine ganze Zahl von 0 bis 5
bedeutet und worin das Platingruppenmetall M^{C} die Koordinationszahl 6 aufweist,
**dadurch gekennzeichnet, dass** ein Hydroxokomplex des Typs H₃M^{C}(OH)₆ mit einem neutralen Donorliganden L umgesetzt wird, wobei mindestens eine Hydroxogruppe des Hydroxokomplexes ausgetauscht wird.

4. Verfahren gemäß einem der Ansprüche 1 bis 3, wobei die Indices a - f in den allgemeinen Formeln (1), (2) und (3) so gewählt werden, dass die resultierenden PGM-Komplexe elektroneutral sind.

5. Verfahren gemäß einem der Ansprüche 1 bis 4, wobei die Reaktionstemperatur im Bereich von 40 bis 110°C, vorzugsweise im Bereich von 45 bis 100°C liegt.

6. Verfahren gemäß einem der Ansprüche 1 bis 5, wobei die Reaktionszeit im Bereich von 2 und 24 Stunden, vorzugsweise im Bereich von 2.5 bis 20 Stunden liegt.

7. Verfahren gemäß einem der Ansprüche 1 bis 6, wobei als einzähnige Donorliganden Ammoniak oder Liganden aus der Gruppe der Monoalkylamine, Dialkylamine, Trialkylamine, Monoalkanolamine, Dialkanolamine, Trialkanolamine, Monoarylamine, Diarylamine, Triarylamine, Trialkylphosphine, Triarylphosphine, Trialkoxyphosphine, Triaryloxyphosphine oder Gemische davon eingesetzt werden.

8. Verfahren gemäß Anspruch 7, wobei als einzähnige Donorliganden die stickstoffhaltigen Liganden Ammoniak, Ethanolamin, Ethylamin, Diethylamin, Isopropanolamin oder Gemische davon eingesetzt werden.

9. Verfahren gemäß einem der Ansprüche 1 bis 6, wobei als zweizähnige Donorliganden Liganden aus der Gruppe der Alkylendiamine, Arylendiamine, Alkylendiphosphine oder Arylendiphosphine oder Gemische davon eingesetzt werden.

10. Verfahren gemäß Anspruch 9, wobei als zweizähnige Donorliganden die stickstoffhaltigen Liganden Ethylendiamin, o-Phenylendiamin, Trimethylendiamin, Tetramethylendiamin, Pentamethylendiamin, Hexamethylendiamin, 1,2-Propylendiamin oder Gemische davon eingesetzt werden.

11. Verfahren gemäß einem der Ansprüche 1 bis 10, wobei der Austausch der OH-Gruppen in den Hydroxokomplexen H₂Pd(OH)₄, H₂Pt(OH)₆ oder H₃M^{C}(OH)₆ (im Falle von M^{C} = Rh^{III} oder Ir^{III}) durch die neutralen Donorliganden L nicht vollständig ist und die resultierenden Verbindungen der allgemeinen Formeln (1), (2) oder (3) weiterhin Aquo- (H₂O), Oxo- (O²⁻) oder Hydroxo- (OH⁻) Liganden enthalten.

12. Verfahren gemäß Anspruch 1, wobei im Falle von M^{A} = Platin(II) als Reduktionsmittel Wasserstoff, Formiergas, Hydrazin (N₂H₄), Oxalsäure (H₂C₂O₄), Formaldehyd (HCHO) oder Ameisensäure (HCOOH) oder Gemische davon verwendet werden.

13. Verfahren gemäß einem der Ansprüche 1 bis 12, wobei die wasserhaltigen Zubereitungen wässrige Lösungen sind und die Umsetzung in wässriger Lösung erfolgt.

14. Verfahren gemäß einem der Ansprüche 1 bis 13, wobei die wasserhaltigen Zubereitungen organische Lösungsmittel, vorzugsweise aliphatische Alkohole und/oder aliphatische Ketone enthalten und die Umsetzung in wasserhaltigen Lösungsmittelgemischen erfolgt.

15. Verfahren gemäß einem der Ansprüche 1 bis 14, wobei die wasserhaltigen Zubereitungen einen pH-Wert im Bereich pH 5 bis 14, vorzugsweise im Bereich pH 7 bis 14 aufweisen.

16. Verfahren gemäß einem der Ansprüche 1 bis 15, wobei die Konzentration der Platingruppenmetalle M^{A}, M^{B} oder M^{C} in der wasserhaltigen Zubereitung im Bereich von 0.5 bis 15 Gew.-% liegt.

17. Verfahren gemäß Anspruch 1, wobei das Reduktionsmittel im Äquivalentverhältnis von 1:1 1 bis 2:1 (bezogen auf M^{A} = Pt) zugesetzt wird.

18. Verfahren gemäß einem der Ansprüche 1 bis 17, wobei der Gesamthalogengehalt, insbesondere der Gesamtchlorgehalt der Zubereitungen < 5000 ppm, vorzugsweise < 2000 ppm beträgt (jeweils bezogen auf den PGM-Gehalt).

19. Verfahren gemäß einem der Ansprüche 1 bis 18, weiterhin umfassend eine Substitution der OH-Anionen (OH⁻)ₑ in den PGM-Komplexen der allgemeinen Formeln
[M^{A}(L)ₐ (H₂O)_{b} (O²⁻)_{c} (OH⁻)_{d}] (OH⁻)ₑ (H⁺)_{f} (1),
[M^{B} (L)ₐ (H₂O)_{b} (O²⁻)_{c} (OH⁻)_{d}] (OH⁻)ₑ (H⁺)_{f} (2)
[M^{C} (L)ₐ (H₂O)_{b} (O²⁻)_{c} (OH⁻)_{d}] (OH⁻)ₑ (H⁺)_{f} (3)
durch eines oder mehrere Anionen anorganischer oder organischer Säuren (wobei die Bedeutung von M^{A}, M^{B}, M^{C}, L, a, b, c, d, e und f wie in den Ansprüchen 1 bis 3 definiert ist und wobei e ≠ 0 ist).

20. Verfahren gemäß Anspruch 19, wobei als Anionen anorganischer oder organischer Säuren solche aus der Gruppe der Acetate, Formiate, Oxalate, Carbonate, Hydrogencarbonate, Sulfate, Nitrate, Phosphate, Tetrafluorborate oder deren Gemische eingesetzt werden.

21. Verwendung der nach dem Verfahren gemäß einem der Ansprüche 1 bis 20 hergestellten wasserhaltigen Zubereitungen als Precursoren für galvanische Bäder, zur Herstellung von heterogenen Katalysatoren oder Metallpulvern oder zur Herstellung weiterer Komplexverbindungen.

22. Wasserhaltige Zubereitung eines Pt(II)-Komplexes, enthaltend als Hauptprodukt einen Komplex der Zusammensetzung [Pt(en)₂](OH)₂.

23. Wasserhaltige Zubereitung eines Pt(II)-Komplexes, enthaltend als Hauptprodukt einen Komplex der Zusammensetzung [Pt(EA)₄](OH)₂.

24. Wasserhaltige Zubereitung eines Pt(II)-Komplexes, enthaltend als Hauptprodukt einen Komplex der Zusammensetzung [Pt(en)₂]CO₃.

25. Wasserhaltige Zubereitung eines Pt(II)-Komplexes, enthaltend als Hauptprodukt einen Komplex der Zusammensetzung [Pt(EA)₄]CO₃.

26. Wasserhaltige Zubereitung eines Pt(II)-Komplexes, enthaltend als Hauptprodukt einen Komplex der Zusammensetzung [Pt(EA)₄](CH₃COO)₂.

27. Wasserhaltige Zubereitung eines Pt(II)-Komplexes, enthaltend als Hauptprodukt einen Komplex der Zusammensetzung [Pt(EA)₄](HCO₃)₂.
